# EUROPEAN PATENT APPLICATION

(11) **EP 1 011 217 A2**
(43) Date of publication of application: **21.06.2000**
(21) Application number: 99124869.1
(22) Date of filing: 16.12.1999
(51) Int. Cl.: H04B 10/16

(54) **Optical repeater**

(30) Priority: 16.12.1998 JP 35808698
(71) Applicant: FUJITSU LIMITED, Kawasaki-shi, Kanagawa 211-8588 (JP)
(72) Inventor: Nishimoto, Hiroshi, Fujitsu Limited, Kawasaki-shi, Kanagawa 211-8588 (JP); Yamane, Kazuo, Fujitsu Limited, Kawasaki-shi, Kanagawa 211-8588 (JP)
(74) Representative: HOFFMANN - EITLE

(57) **Abstract**

In view of solving the problem that the bit rate and signal duty to be processed are fixed because of the circuits for timing extraction and signal identification in the case where waveform deterioration is generated by the influence of the transmission line during the optical transmission, an optical repeater for free bit rate and duty of the input signal can be realized by converting an optical signal into an electrical signal, thereafter adjusting waveform shaping and duty and then executing the optical-electrical conversion for such signal.

## Description

### BACKGROUND OF THE INVENTION

### Field of the Invention:

The present invention relates to a repeater for reproducing and relaying the signal of which optical signal waveform is deteriorated in the optical transmission line in the optical communication system utilizing optical beam such as optical transmission system, optical add-drop system and optical cross-connection system and an optical repeater for converting optical wavelength to be transmitted by the optical communication system to different optical wavelength in the course of transmission in order to form a flexible system which can process the optical signals of different bit rates and different pulse duty.
In these years, development of large capacity optical network has been progressed utilizing optical amplifying technique, wavelength multiplexing technique, optical add-drop technique and optical cross-connection technique in order to meet the requirement for large capacity communication network.
In the optical network, it is expected to process with flexibility the optical signals (NRZ and RZ signals) of variable bit rates and different pulse duty from the viewpoint of possibility for accommodation and upgrade of the existing system.
Moreover, in the optical network, optical devices such as optical fiber, optical amplifier, branching filter for wavelength multiplexing, optical add-drop multiplexer and optical switch or the like basically does not depend on the bit rate and pulse duty, etc. of the signal to be transmitted but such bit rate and duty are generally fixed for the optical repeater for reproducing waveform accompanied by optical-electrical conversion and optical wavelength converter accompanied by optical-electrical conversion.
Therefore, in order to realize a flexible optical network which can process various optical signals, a repeater and a wavelength converter which can process various bit rates and pulse duties are required.

### Description of the Related art:

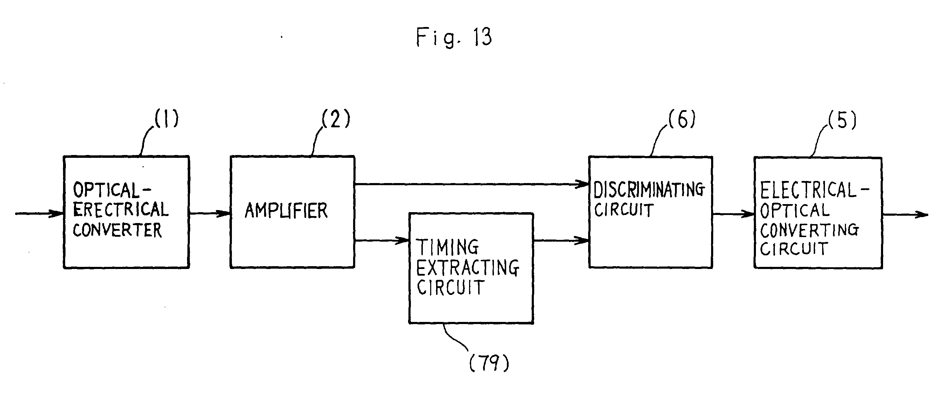

Fig. 13 illustrates an example of a reproducing type optical repeater of the related art.
The existing reproducing type optical repeater optical-electrically converts an input optical signal with a optical-electrical converting means (1).
The signal converted to an electrical signal by the optical-electrical converting means (1) is then amplified by an amplifier (2).
An output of the amplifier (1) extracts the clock from an electrical signal with a timing extracting circuit (79).
Ordinary timing extraction is performed through clock extraction using a PLL including (VOC) and a band-pass filter corresponding to the bit rate but in this case a circuit must be formed depending on the bit rate of an input signal.
The signal waveform dulled by transmission can be reproduced by identifying the electrical signal from the amplifier (2) in the discriminating circuit (6) with the clock.
In the case of such related art, the bit rate to be processed for timing reproduction by the timing extracting circuit depends on the timing extracting circuit and the bit rate is fixed by the timing extracting circuit structure and the pulse duty to be processed can also be fixed.
The second related art is disclosed in the "SDH/SONET reproducing repeater not dependent on bit rate" by Atozawa, et. al. B-10-109, Communication Society of Institute of Electronics, Information and Communication Engineers, 1997.
This repeater is a reproducing type repeater designed for processing a plurality of bit rates.
In this example, a bit rate detecting means, a PLL, a frequency dividing circuit and a switch are comprised to process the maximum frequency and the maximum frequency of bit rate of 1/2 exponent.
However, the signals of other bit rates and different pulse duties cannot be processed.
In the first related art, the bit rate to be processed depends on the timing extracting circuit and the bit rate is fixed by the timing extracting circuit structure because the timing is reproduced by the timing extracting circuit.
Moreover, the pulse duty to be processed can also be fixed.
In the second related art, a plurality of bit rates can be processed but is limited to the particular bit rate and the signals of other bit rates and different pulse duty cannot be processed.
Moreover, with development of optical wavelength multiplexing technique, requirement is generated for a wavelength converting apparatus which converts an optical wavelength to the desired wavelength in order to branch, combine and insert the optical wavelength multiplex signal of branching filter for wavelength multiplexing, optical add-drop multiplexer, optical cross-connection switch or the like.
In regard to this wavelength converting apparatus, development is continued for the technique for converting in direct the optical beam and this technique still includes many problems and is not yet put into practical use.
Therefore, a current wavelength converting apparatus converts an optical signal to an electrical signal using an ordinary optical repeater and transmits an optical signal using a new light source.
This structure also has a program which is the same problem of the optical repeater of the related art.
### SUMMARY OF THE INVENTION

As the examples of transmission rate of the optical transmitting signals used in the current optical network, there are 10Gb/s NRZ signal, 2.4Gb/s NRZ signal, 600Mb/s NRZ signal, 150Mb/s NRZ signal and 400Mb/s RZ signal, and it is therefore an object of the present invention to provide an optical repeater and wavelength converting apparatus which can process with flexibility all signals of various bit rates and different pulse duties.
The present invention realizes an optical repeater which assures free use of bit rate and duty of an input signal by adjusting, after conversion of optical signal into an electrical signal, the waveform and duty and then converting this signal by the electrical-optical conversion.

Moreover, the present invention realizes bit rate free wavelength conversion by changing wavelength of the optical signal output from an optical repeater in regard to the wavelength of optical signal to be input to the optical repeater.

In addition, in the case where amplitude, phase and waveform of an electrical signal are determined after the optical-electrical conversion by the optical repeater and then electrical-optical conversion is conducted using such signal, the electrical-optical converting means should be designed as the circuit structure corresponding to the maximum transmission rate used in the transmission line and is provided as the individual unit different from the other circuits.

Other structures should individually correspond to the transmission rate and the bit rate free optical repeater not depending on the input signal may be realized only by replacing the unit corresponding to the transmission line to be connected.

These repeaters may be used for optical wavelength terminal, optical branching/inserting apparatus and optical cross-connection apparatus.

### BRIEF DESCRIPTION OF THE DRAWINGS

Fig. 1 is a diagram illustrating a structure of the optical repeater of the present invention.
Fig. 2 is a diagram illustrating the first practical structure of Fig. 1.
Fig. 3 is a diagram illustrating the second practical structure of Fig. 1.
Fig. 4 is a diagram illustrating the third practical structure of Fig. 1.
Fig. 5 is a diagram illustrating a practical structure of duty reproducing means.
Fig. 6 is a diagram illustrating the structure of electrical-optical converting circuit (5) in the optical repeater for wavelength conversion.
Fig. 7 is a structural diagram of optical amplifying/ repeating transmission system using the optical repeater of the present invention.
Fig. 8 is a structural diagram of the wavelength multiplex system utilizing the optical repeater of the present invention.
Fig. 9 is a structural diagram of the optical add-drop system utilizing the optical repeater of the present invention.
Fig. 10 is a structural diagram of the optical cross-connection system utilizing the optical repeater of the present invention.
Fig. 11 is a structural diagram of the wavelength multiplex terminal utilizing the optical repeater of the second present invention.
Fig. 12 is a structural diagram of the wavelength demultiplex terminal utilizing the optical repeater of the second present invention
Fig. 13 is a diagram illustrating the reproducing type optical repeater of the related art.

### DESCRIPTION OF THE PREFERRED EMBODIMENTS

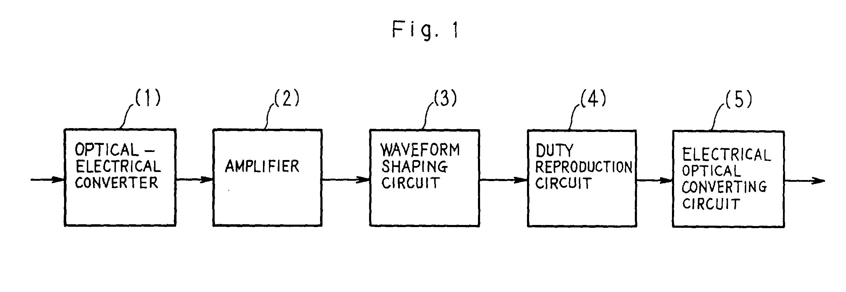

Fig. 1 is a diagram illustrating a structure of the present invention.
In this figure, 1 designates an optical-electrical converter; 2, an amplifier; 3, a waveform shaping circuit; 4, a duty reproducing circuit and 5, an electrical-optical converting circuit.
The optical-electrical converter 1 converts an optical signal into an electrical signal.
The amplifier 2 amplifies an electrical signal from the optical-electrical converter 1.
The waveform shaping circuit 3 improves deterioration of waveform generated by noise in the high level and low level sides of the binary digital signal as the electrical signal from the amplifier 2, transmission through fiber (wavelength dispersion, non-linear effect, polarized dispersion) and imperfect circuit design.
The duty reproducing circuit 4 recovers the pulse duty changed by the fiber transmission and waveform reproducing means 3 to the duty before the change.
The electrical-optical converting circuit 5 converts an electrical signal to an optical signal by electrical-optical conversion with an electrical signal of which duty is recovered by the duty reproducing circuit 4.
In this case, the waveform conversion can also be realized by changing wavelength with the electrical-optical converting circuit 5 to the wavelength different from the optical wavelength input in the optical-electrical converter 1.
The present invention can form the pulse waveform without reproducing of retiming by adjusting the duty through waveform shaping and does not accumulate changes of pulse duty due to the fiber transmission of the high speed signal.
Therefore, waveform formation (transmission quality improvement) and waveform conversion are possible for the optical signal of the freely selected bit rate and pulse duty less than the maximum operation bit rate determined by the circuit characteristic without any restriction on the bit rate and pulse duty.
Moreover, the optical signal of amplitude modulation input to the optical-electrical converter 1 can be output through conversion of modulation system to the optical phase modulation or optical frequency modulation depending on the selection of the means for modulating the light beam in the electrical-optical converting circuit.

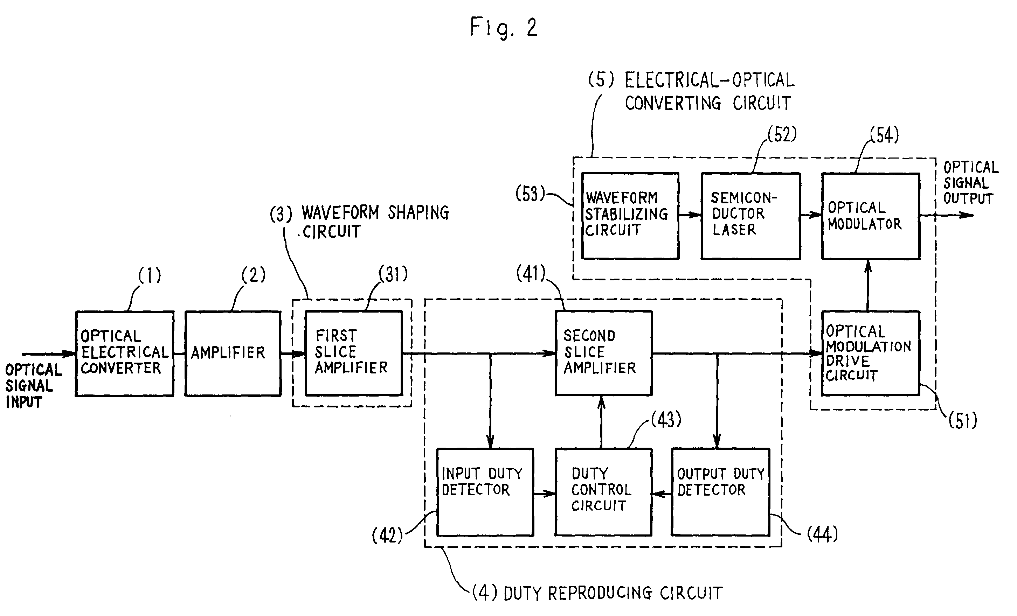

Fig. 2 is a first practical example of the structure of Fig. 1.
The optical-electrical converter 1 converts the optical amplitude modulated digital signal in which waveform deterioration is generated through transmission by the transmission line to an electrical signal.
This optical-electrical converter 1 is structured by a light receiving element such as PIN photo-diode and an avalanche diode.
The amplifier 2 amplifies an electrical signal from the optical-electrical converter 1.
The waveform shaping circuit 3 is formed of a slice amplifier.
The first slice amplifier 31of the waveform shaping circuit 3 improves waveform distortion and waveform dull generated by noise, fiber transmission and imperfect circuit design to be included in the transmitted signal by cutting at the predetermined value the high level and low level sides of the electrical signal waveform amplified by the amplifier 2.
Here, it is preferable to set the reference level of the first slice amplifier 31 of the waveform shaping circuit 3 to the optimum level from the viewpoint of SN ratio.
The duty reproducing circuit 4 is composed of second slice amplifier 41, input duty detector 42, duty control circuit 43 and output duty detector 44.
The input duty detector 42 determines whether the duty of optical signal is 50% or 100%.
The second slice amplifier 41 recovers the pulse duty to that before the change caused by the optical transmission and first slice amplifier 31 by cutting an output of the first slice amplifier 31 at the reference level from the duty control circuit 43.
The output duty detector 44 detects the output duty of the second slice amplifier 41 and then notifies the detection result to the duty control circuit 43.
The duty control circuit 43 controls the reference level of the second slice amplifier 41 based on the result of the input duty detector 42 and output duty detector 44.
The electrical-optical converting circuit 5 is composed of optical modulation drive circuit 51, semiconductor laser 52, optical modulator 54 and wavelength stabilizing circuit 53.
The optical modulation drive circuit 51 drives the optical modulator 54 with an output from the second slice amplifier 41.
The optical modulator 54 is formed of an external modulator such as the Mach-Zehnder type optical modulator and electrolytic absorption type semiconductor modulator or the like which realizes amplitude modulation by forming an optical waveguide on the lithium niobate substrate and giving phase difference to the light beam with an electrode formed on the optical waveguide.
This optical modulator 54 executes the optical-amplitude modulation to the light beam from the semiconductor laser 52 with the signal from the optical modulation drive circuit 51 to provide an optical output signal.
Amplitude modulation is basically preferable as the modulation system for the optical output of the optical modulator but the optical-phase modulation and optical-frequency modulation are also possible by changing combination of the output format of the optical modulation drive circuit 51 and optical modulator 54.
The waveform stabilizing circuit 53 stabilizes optical wavelength by monitoring a rear side output of the semiconductor laser 52 to stabilize an output of the semiconductor laser 52 to the light beam of constant wavelength and controlling both or any one of temperature and drive current.
On the occasion of converting to the desired wavelength, external setting is performed to obtain the value corresponding to the desired wavelength by controlling, with the wavelength stabilizing circuit 53, both or any one of controlled temperature and drive current.

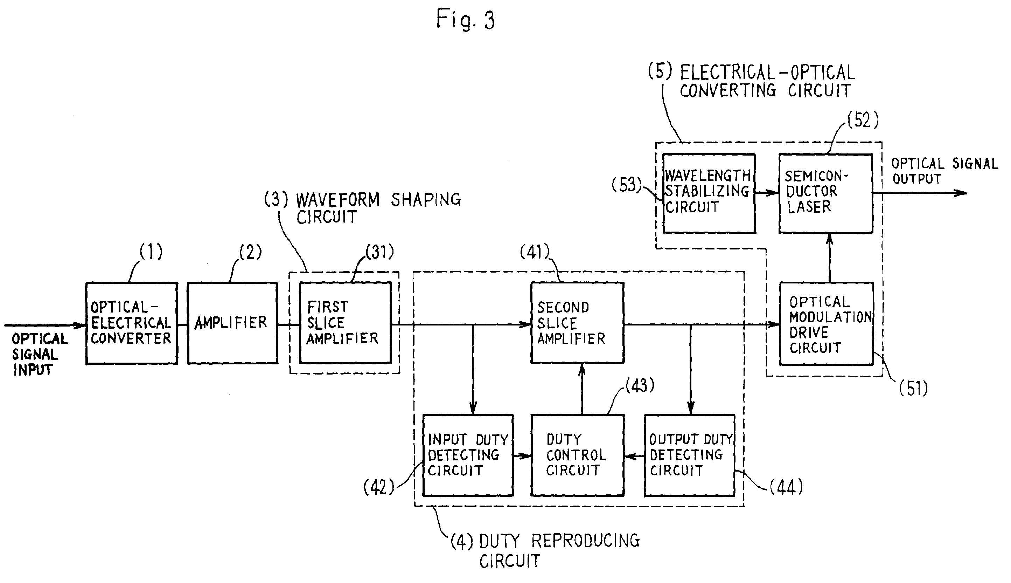

Fig. 3 is a second practical example of the structure of Fig. 1.
Structure of Fig. 3 is an example where the direct modulation is performed by the semiconductor laser 52 in the structure of the electrical-optical converting circuit 5 having the structure of Fig. 1. Other structures and operations are similar to those of Fig. 2.
In regard to this figure, the electrical-optical converting circuit 5 varies a bias current of semiconductor laser 52 in the modulation drive circuit 51 with an output from the duty reproducing circuit 4 and changes an optical output level of the semiconductor laser 52 for optical amplitude modulation.
In the structure of Fig. 2, since the semiconductor laser 51 is driven in direct by the optical modulation drive circuit 51, optical frequency modulation can easily be conducted by controlling a drive current. Moreover, since the semiconductor laser 54 is driven in direct, low price structure can be realized but since the maximum bit rate is restricted by the characteristic of semiconductor laser 54, this structure is not preferable for the optical network system including the bit rate of 2.5Gb/s or higher.

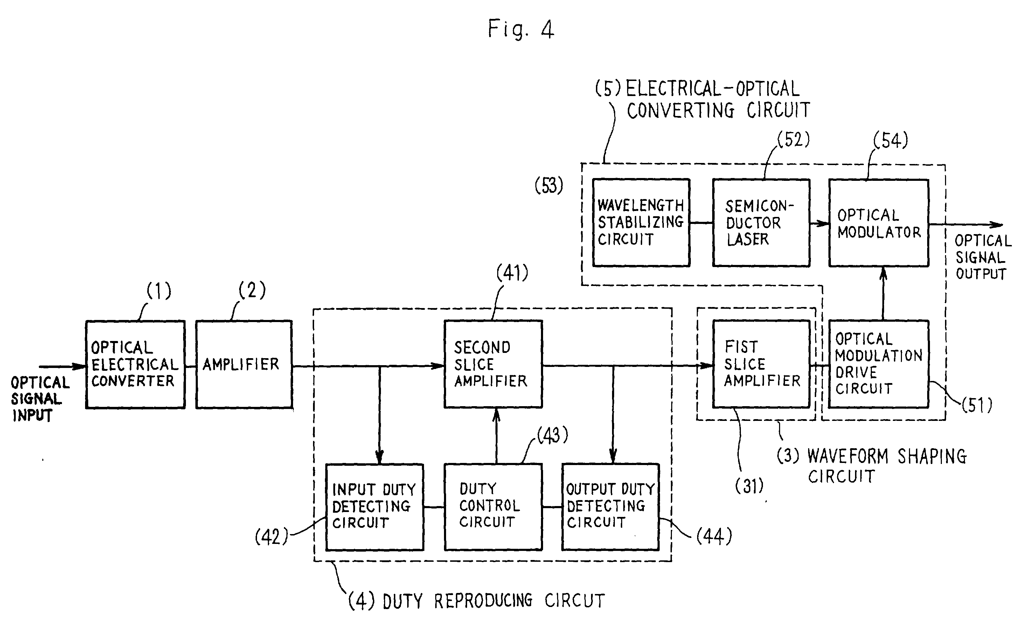

Fig. 4 illustrates a third practical example of the structure of Fig. 1.
In the structure of Fig. 4, layout structures of the duty reproducing circuit 4 and waveform forming means 3 in the structure of Fig. 1 are respectively replaced.
The other structures and operations are identical to those of Fig. 2
The input duty detector 42 outputs the result of determination to the duty control circuit 43 by deciding the duty of an electrical signal amplified by the amplifier 2 to 50% or 100%.
The output duty detector 44 detects the output duty of the second slice amplifier 42 and outputs the detection result to the duty control circuit 43.
The duty control circuit 43 adjusts duty by controlling the reference level of the second slice amplifier 41 with an output of the input duty detector 42 and an output of the output duty detector 44.
The second slice amplifier 41 changes duty of electrical signal by cutting an electrical signal output from the amplifier at the predetermined reference level under the reference level control by the duty control circuit 43.
The first slice amplifier 31 is capable of reproducing the pulse waveform, in order to form waveform of an output of the second slice amplifier 41, by amplifying an output of the second slice amplifier 41 and cutting the peak value and bottom value at the predetermined levels. Since the waveform shaping circuit 3 is located after the duty reproducing circuit , duty changes a little but such change of duty can be minimized by providing the structure which results in higher amplifier gain.
In Fig. 4, the structure of electrical-optical converting circuit 5 may be replaced with the structure of optical-electrical converting circuit 5.

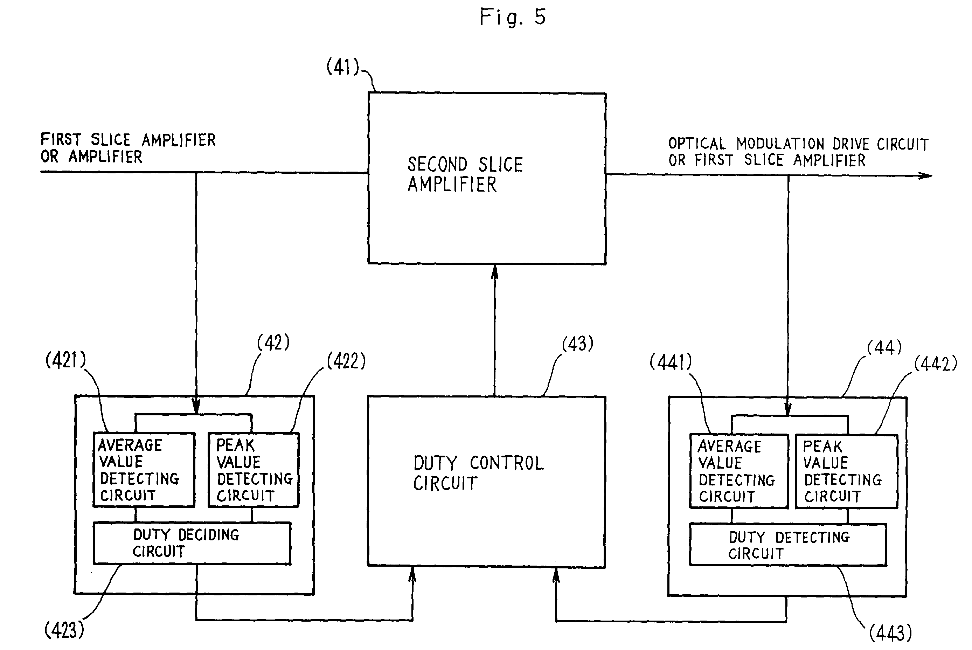

Fig. 5 illustrates a practical structure of the duty reproducing circuit illustrated in Fig. 2 to Fig. 4.
The input duty detector 42 is structured by average value detecting circuit 421, peak value detecting circuit 422 and duty deciding circuit 423.
The first slice amplifier 31 inputs an output of the amplifier 2 to an average value detecting circuit 421 and a peak value detecting circuit 422.
The average value detecting circuit 421 detects the average value of the signal waveform and then inputs it to the duty deciding circuit 423.
The peak value detecting circuit 422 detects the peak value of the signal waveform and inputs it to the duty deciding circuit 423.
The duty deciding circuit 423 detects a ratio of the peak value and average value based on the outputs of average value detecting circuit 421 and peak value detecting circuit 422 in order to decide that the pulse duty of input electrical signal is 50% or 100% and then outputs the result to the duty control circuit.
Here, the pulse duty of an input electrical signal is decided to be 50% or 100% because the transmission code used in general by optical communication is RZ signal (duty: 50%) or NRZ signal(duty: 100%).
The duty deciding means 423 not only decides that the duty is 50% or 100% as explained above but also can be used in the system in which particular duty is used for the encoding system of transmission system.
In this case, duty can be set freely depending on the input signal by outputting, to the duty detecting circuit, the analog result detected on the basis of outputs of the average value detecting circuit 421 and peak value detecting circuit 422.
An output duty detector 44 is composed of an average value detecting circuit 441, a peak value detecting circuit 442 and a duty detecting circuit 443.
An output of the second slice amplifier 41 is input to both the average value detecting circuit 441 and peak value detecting circuit 442.
The average value detecting circuit 441 detects the average value of signal waveform and then inputs it to a duty deciding circuit 443.
The peak value detecting circuit 442 detects the peak value of signal waveform and inputs it to the duty deciding circuit 423.
The duty detecting circuit 443 obtains a ratio of the outputs of the average value detecting circuit 441 and peak value detecting circuit 442 to detect a duty ratio of the output of the second slice amplifier 41 and then outputs this result to the duty control circuit 43.
The duty control circuit 43 controls the reference level of the second slice amplifier based on the result of the duty deciding circuit 423 and duty detecting circuit 443.

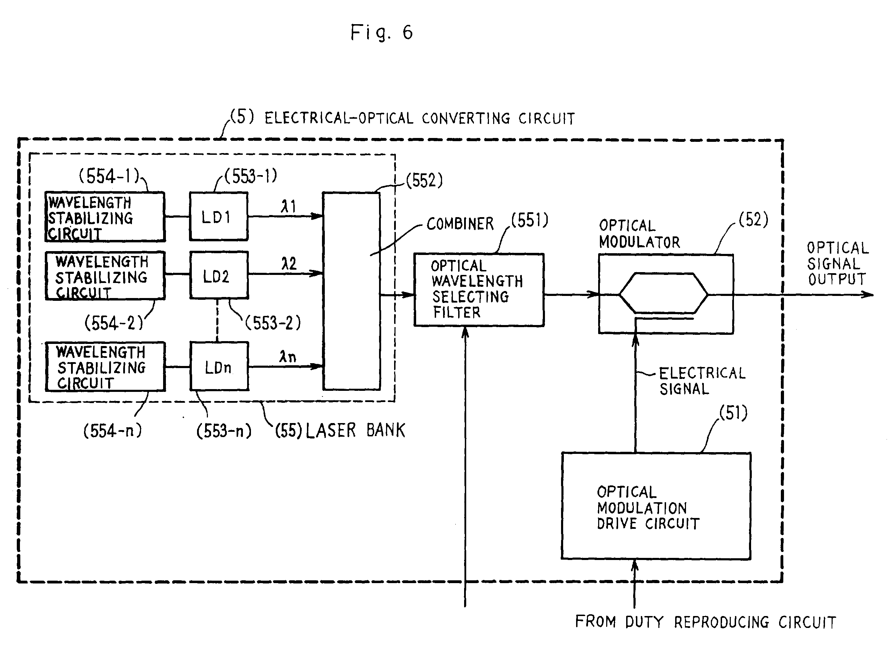

Fig. 6 illustrates a structure of the electrical-optical converting circuit 5 in the optical repeater for waveform conversion.
Structure of Fig. 6 may be replaced with the electrical-optical converting circuit 5 in Fig. 2 and Fig. 4.
In this figure, 55 designates a laser bank composed of semiconductor lasers 553-1 to 553-n, waveform stabilizing circuits 554-1 to 554-n and a waveform combiner 552.
The semiconductor lasers 553-1 to 553-n are controlled in the temperature and drive current by the waveform stabilizing circuits 554-1 to 554-n to provide different waveform outputs. Optical outputs of the semiconductor lasers 553-1 to 553-n are waveform- multiplexed by the waveform combiner 552.
The light beam of the particular waveform among the waveform-multiplexed optical signal is selected by an optical waveform selecting filter 551 and is then output to the optical modulator 52.
This optical waveform selecting filter 551 is formed using a filter which can freely vary the pass-band frequency of an acoustic optic tunable filter (AOTF), etc. with an external signal.
Instruction for waveform selection can be issued from an apparatus outside the repeater or with a control signal for selected waveform switching of AOFT by reproducing the monitor control signal included in the transmission signal.

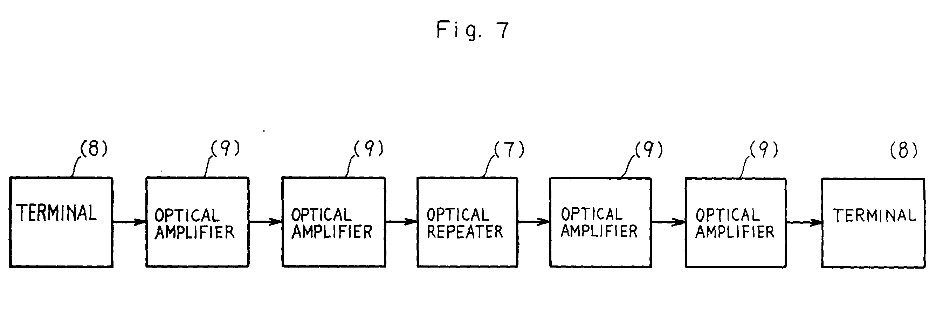

Fig. 7 illustrates a structure of optical amplifying and repeating transmission system utilizing an optical repeater 7 of the structure illustrated in Fig. 1 to Fig. 7.
The optical amplifying and repeating transmission system inputs an optical output from the terminal 8 to the optical repeater 7 via a plurality of optical amplifiers 9 (rare element doped optical fiber amplifier) for amplifying in direct the optical signal in the transmission line consisting of optical fiber.
The optical repeater 7 converts the optical signal into an electrical signal with the structure illustrated in Fig. 1 to Fig. 6 and executes waveform shaping and also adjusts duty to convert the electrical signal to an optical signal for providing an output signal.
This optical output in the transmission line consisting of optical fiber is then sent to the terminal 8 via a plurality of optical amplifiers 9 for amplifying in direct the optical signal.
When a repeater of the present invention is provided in the transmission line, a system for improving accumulated noise during relaying by optical amplifier and waveform deterioration due to fiber transmission for the long distance transmission can be formed not depending on the bit rate.

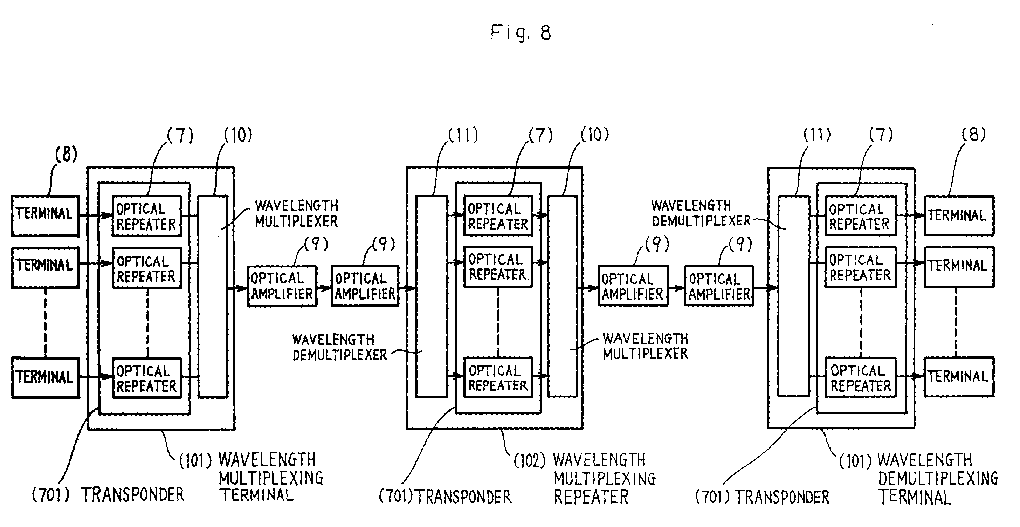

Fig. 8 illustrates an example of structure of the waveform multiplex system utilizing optical repeater of Fig. 1 to Fig. 6 of the present invention.
In order to avoid overlapping of wavelength when the optical signal from a plurality of terminals 8 is wavelength multiplexed by the wavelength multiplexer 10 in the predetermined wavelength interval on the occasion of transmitting the optical signal from the terminal 8 as the transmission signal (optical transmission of single wavelength) with a transponder 701(wavelength converting means) provided in the wavelength multiplexing terminal 101 in the transmitting side, the optical signal is output through wavelength conversion to the predetermined wavelength, waveform shaping and duty reproduction by the optical repeater 7 of the structure of Fig. 1 to Fig. 6 of the present invention.
This wavelength multiplexed optical signal is input to the wavelength multiplex repeater 102 via a plurality of optical amplifiers 9 for direct amplification of optical signal provided in the optical fiber.
The wavelength multiplex repeater 702 branches the input optical wavelength multiplex signal corresponding to each wavelength by the wavelength demultiplexer 11, input these branching signals to the optical repeater 7 of the structure of Fig. 1 to Fig. 6 corresponding to each wavelength and then outputs these optical signals to the wavelength multiplexer 10 through waveform shaping and duty reproduction.
The wavelength multiplexing mans 10 wavelength-multiplexes an output of each optical repeater 7 to output to the optical fiber transmission line.
An output of the wavelength multiplexer 10 is input to the wavelength multiplex terminal 103 in the receiving side via a plurality of optical amplifiers 9 for direct amplification of optical signal provided in the optical fiber transmission line.
The wavelength multiplex terminal 103 in the receiving side inputs the optical signals branched into respective wavelengths by the wavelength demultiplexer 11 to the optical repeater 7 of the structure of Fig. 1 to Fig. 6.
Each repeater outputs the optical signal to each receiving terminal 8 through waveform shaping, duty reproducing, wavelength conversion to the predetermined wavelength.
The long-haul transmission of optical signal of various bit rates and different pulse duties can be realized by applying, as explained above, the optical repeater of Fig. 1 to Fig. 6 of the present invention to the transponder (wavelength converting means) and repeater of the transmitting/receiving means.

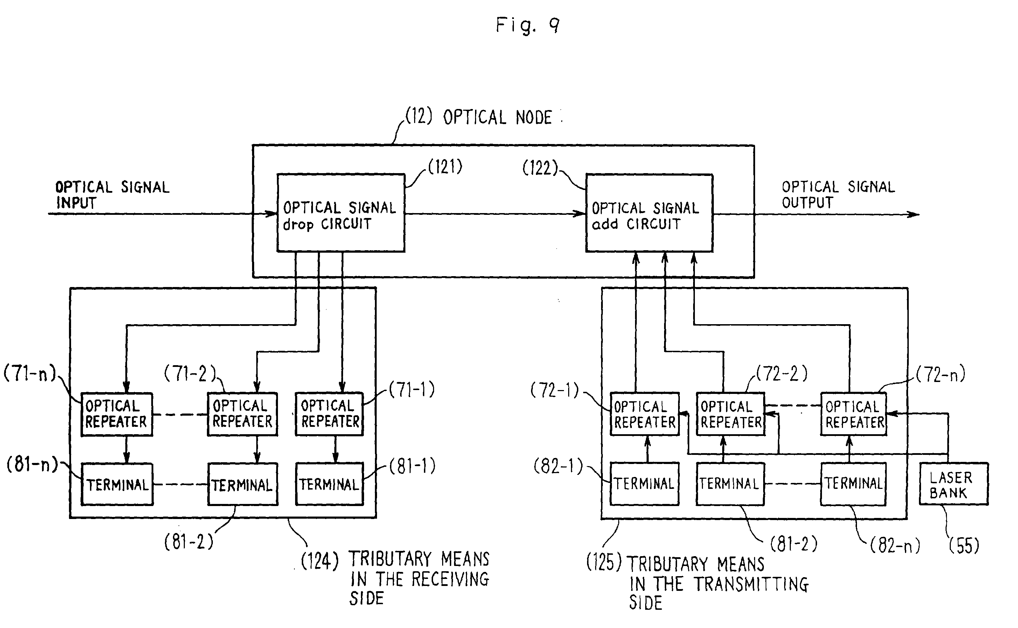

Fig. 9 illustrates an example of the optical add-drop system utilizing the optical repeaters 71-1 to 71-n of the structure of Fig. 1 to Fig. 6.
At the optical node 12, the optical signal drop mans branches the optical signal transmitted through optical wavelength multiplexing to the optical signal of the particular wavelength and then outputs the signal to a tributary means 123 in the receiving side.
The optical signal drop circuit branches the optical signal of particular wavelength through combination of the wavelength selection filter, fiber grating filter and circulator and then outputs the optical signal to the tributary means 124 in the receiving side.
The tributary means 124 in the receiving side is composed of optical repeaters 71-1 to 71-n of the structure of Fig. 1 to Fig. 6 of the present invention and the terminals 81-1 to 81-n and can receives the signal with the terminals 81-1 to 81-n through waveform shaping, duty reproduction and wavelength conversion, if necessary, for each wavelength dropped by the optical signal drop circuit .
The optical signal not dropped to the tributary means in the receiving side by the optical signal drop circuit 121 is waveform-multiplexed with the optical signal from the tributary means 125 in the transmitting side and is then output as the optical signal output.
The tributary means 125 in the transmitting side is composed of the terminals 82-1 to 82-n and the optical repeaters 72-1 to 72-n of the structure of Fig. 6.
The optical repeaters 72-1 to 72-n execute the wavelength conversion for the optical outputs from the terminals 82-1 to 82-n to the optical signal add circuit 122 through waveform shaping, duty reproducing and wavelength conversion, if necessary.
In this case, a common laser bank 55 is provided in place of common use in unit of optical repeater as illustrated in Fig. 6 and an output thereof is wavelength- selected by the wavelength selecting filter provided in each optical repeater and is then modulated by the optical modulator.
As explained above, the flexible add-drop of the optical signal in various bit rates and different pulse duties can be realized by applying the optical repeater of the structure of Fig. 1 to Fig. 6 of the present invention to the wavelength converting means of the tributary means.

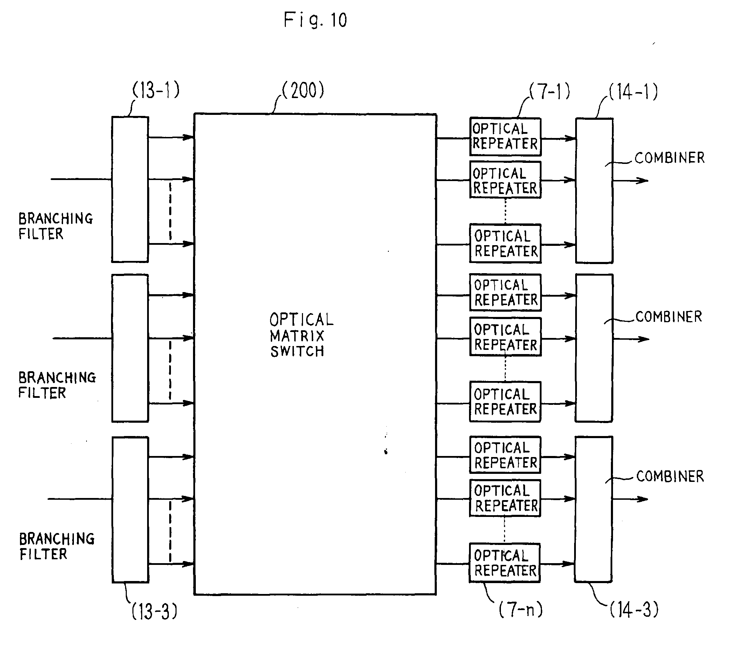

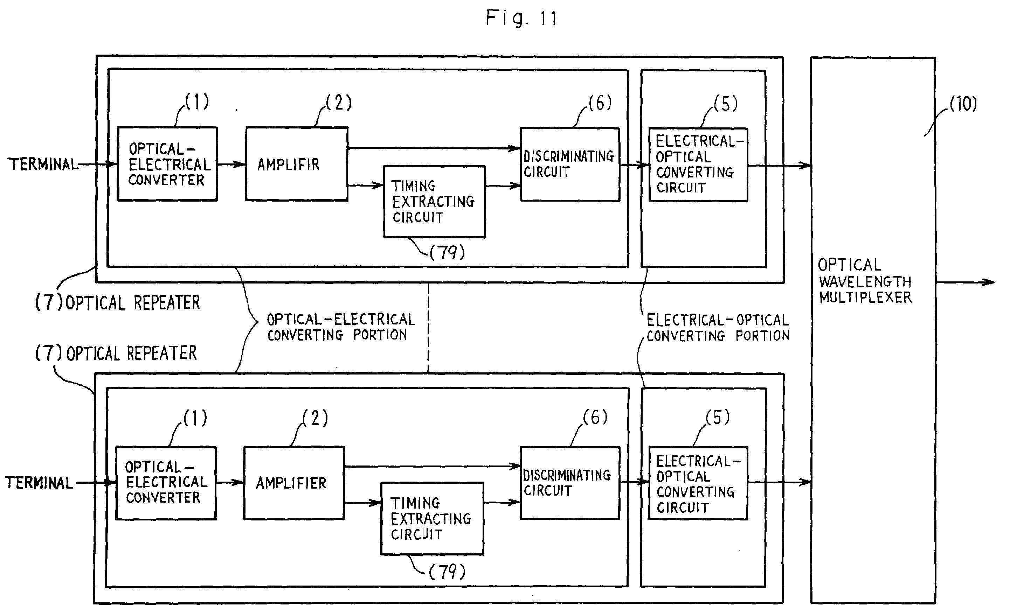

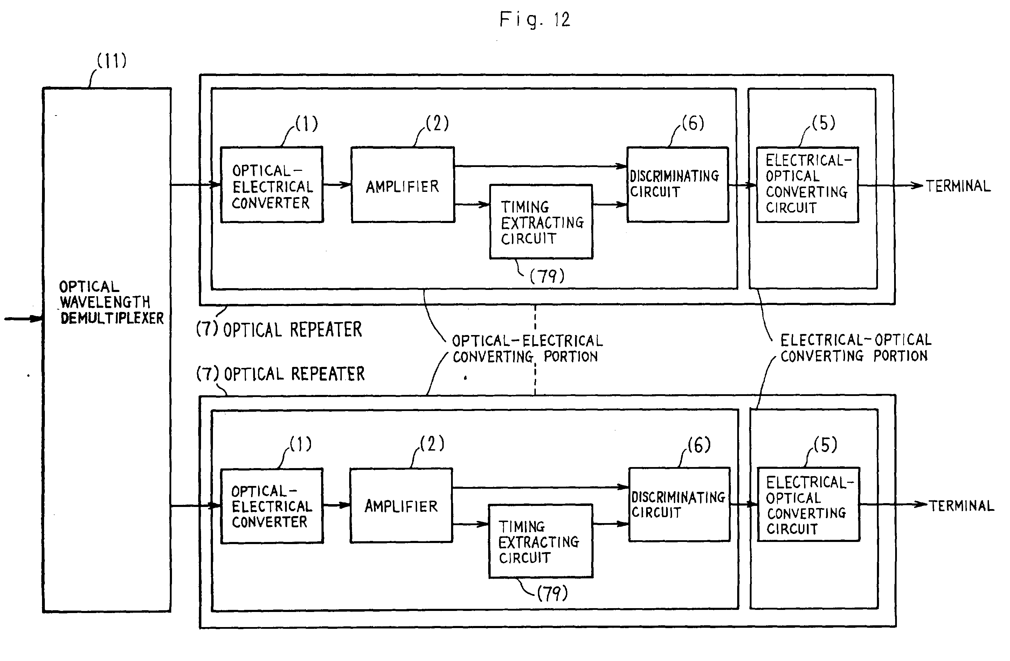

Fig. 10 illustrates a structure of the optical cross-connection system using the optical repeater of Fig. 1 to Fig. 6 of the present invention.
A plurality of optical inputs are multiplexed into a plurality of optical signals by the branching filters 13-1 to 13-3 and are then input to optical matrix switch 200.
The optical signals changed in direction through the switching by the optical matrix switch 200 are then subjected to the waveform shaping and duty reproducing in the optical repeaters 7-1 to 7-n of the structure of Fig. 1 to Fig. 6, combined by the combiners 14-1 to 14-3 and then output to the transmission line.
The optical cross-connection system which assures flexible process of optical signals of various bit rates and different pulse duties can be obtained by applying the optical repeater of the present invention to the wavelength converting means of the optical cross-connection system.
An embodiment of another approach to the bit rate free optical repeater of the present invention is illustrated in Fig. 11 and Fig. 12.
In the wavelength multiplex transmitting apparatus, the transmission rate of the input optical signal is not always identical and a bit free electrical-optical converting circuit in the transponder for conversion into the optical signal in the transmitting line side can be realized rather easily but the optical-electrical converter in the transponder is provided with the circuit depending on the transmission rate such as the timing extracting circuit or the equalizing circuit and therefore if such signal is converted to the bit free circuit, switching for a plurality of circuits will be required.
Therefore, as is illustrated in Fig. 11 and Fig. 12, the optical repeater is structured by the optical-electrical converting portion and the electrical-optical converting portion in such a manner as dividing the package into two sections.
The optical-electrical converting portion is composed of the optical-electrical converter 1, amplifier, timing extracting circuit 79 and discriminating circuit 6.
These structures can be realized with the circuit structure of the related art illustrated in Fig. 11.
The optical-electrical converting portion is composed of the optical-electrical converting circuit 5.
This optical-electrical converting circuit may be realized with the optical-electrical converting circuit 5 of Fig. 2, Fig. 3 and Fig. 6.
Here, since the optical-electrical converting portion requires high accuracy wavelength control and also requires expensive parts such as external modulator, rise of cost becomes high and therefore cost reduction may be realized by introducing the common bit free structure.
Since the optical-electrical converting portion uses many electrical circuit elements and rise of cost is not so high even when the timing extracting circuit and signal identification circuit are provided for each bit rate.
Therefore, a low cost flexible optical repeater can be structured by producing common electrical-optical converting portions and optical-electrical converting portions corresponding to each bit rate and duty and then replacing these portions corresponding to the bite rate of the terminal.
Structure of the optical repeater of Fig. 11 and Fig. 12 can be used as the optical repeater of the structure of Fig. 7 to Fig. 10.
The optical repeater of the present invention can convert the optical-electrically converted signal through the electrical-optical conversion without relation of optical signal rate and duty on the occasion of waveform shaping and wavelength conversion and therefore can realize bit rate free and duty free waveform shaping and optical wavelength conversion.

## Claims

1. An optical repeater, comprising:
an optical-electrical converter converting an optical signal into an electrical signal;
a waveform shaping circuit shaping waveform of an output of said optical-electrical converter;
a duty reproducing circuit adjusting duty of an output from said waveform shaping circuit ; and
an electrical-optical converter electrical-optical conversion of an output of said duty reproducing circuit.

2. An optical repeater as in claim 1 wherein the optical-electrical converter receiving a first optical wavelength and;
the electrical-optical converter outputting a optical wavelength light different from said first optical wavelength.

3. An optical repeater as in claim 1 wherein the optical-electrical converter receiving a first optical wavelength and;
the electrical-optical converter outputting a optical wavelength light same wavelength of said first optical wavelength.

4. An optical communication system including an optical repeater for relaying an optical signal of a first terminal to a second terminal, characterized in that said optical repeater comprises:
an optical-electrical converter converting an optical signal to an electrical signal;
a waveform shaping circuit shaping waveform of an output of said optical-electrical converter;
a duty reproducing circuit adjusting duty of an output from said waveform generating circuit; and
an electrical-optical converter for electrical-optical conversion of an output of said duty reproducing circuit.

5. An optical wavelength multiplex terminal for optical-wavelength multiplexing a plurality of optical signal from a plurality of terminals, characterized in comprising:
a plurality of optical repeaters optical-electrical converting a light from the terminals respectively and outputting a light to said plurality of terminals; and
a wavelength multiplexer outputting optical outputs of a plurality of said optical repeaters through wavelength multiplexing process, wherein
the plurality of optical repeaters comprising respectively:
an optical-electrical converter converting an optical signal into an electrical signal;
a waveform shaping circuit shaping waveform of an output of said optical-electrical converter;
a duty reproducing circuit adjusting duty of an output from said waveform shaping circuit ; and
an electrical-optical converter electrical-optical converting an output of said duty reproducing circuit.

6. An optical wavelength demultiplex terminal for optical-wavelength demultiplexing a transmitted light and outputting a plurality of wavelength demultiplexed lights to a plurality of terminals, characterized in comprising:
a wavelength demultiplexer demultiplexing a plurality of optical wavelength multiplexed lights; and
a plurality of optical repeaters optical-electrical converting a light signal from said wavelength demultiplexer and outputting a light, wherein said optical repeaters comprising:
an optical-electrical converter converting an optical signal into an electrical signal,
a waveform shaping circuit shaping waveform of an output of said optical-electrical converter,
a duty reproducing circuit adjusting duty of an output from said waveform shaping circuit, and
an electrical-optical converter electrical-optical conversion of an output of said duty reproducing circuit.

7. An optical wavelength multiplex repeater characterized, in comprising:
a wavelength demultiplexer wavelength demultiplexing of optical wavelength multiplexed light;
a plurality of optical repeaters relaying output light of the wavelength demultipliers;
an optical wavelength multiplexer wavelength multiplexing a plurality of lights from said repeaters; wherein a plurality of said optical repeaters comprising;
an optical-electrical converter converting an optical signal into an electrical signal,
a waveform shaping circuit shaping waveform of an output of said optical-electrical converter,
a duty reproducing circuit adjusting duty of an output from said waveform shaping circuit, and
an electrical-optical converter electrical-optical converting an output of said duty reproducing circuit.

8. An optical add/drop apparatus for demultiplexing a particularly optical wavelength light and multiplexing a particularly optical wavelength light, characterized in comprising:
a optical signal dropping means for demultiplexing the particularly optical wavelength signal;
a receiving repeater relaying the particularly optical wavelength signal from the optical signal dropping means to a receiving terminal;
a transmitting terminal outputting a light; and
a transmitting repeater relaying a light from the transmitting terminal to the optical signal adding means; wherein the receiving repeater and the transmitting repeater comprising
a optical-electrical converter converting an optical signal into an electrical signal,
a waveform shaping circuit for shaping waveform of an output of said optical-electrical converter,
a duty reproducing circuit for adjusting duty of an output from said waveform shaping circuit; and
an electrical-optical converter electrical-optical converting an output of said duty reproducing circuit.

9. An optical cross-connection system, comprising:
branching means for branching optical signal from a plurality of optical lines;
switch means for cross-connecting an output of said branching means;
an optical repeater receiving an output of the switch means; wherein the optical repeater including
a optical-electrical converter converting an output of said switch means to an electrical signal,
a waveform shaping circuit shaping waveform of an output of said optical-electrical converter,
a duty reproducing circuit for adjusting duty of an output of said waveform shaping circuit, and
an electrical-optical converter for electrical-optical conversion of an output of said duty reproducing circuit, and
combining means for combining outputs of said optical repeater.

10. An optical wavelength multiplexing terminal for multiplexing a plurality of lights from a plurality of terminals and transmitting an optical wavelength multiplexed signal, characterized in comprising;
a plurality of optical repeaters relaying the light from said terminals respectively; and
a wavelength multiplexer wavelength-multiplexing optical output from the plurality of said optical repeaters; wherein said repeaters comprising
an optical-electrical converter converting a light from the terminals respectively and extracting a timing and discriminating a signal; so that said optical-electrical converter performing to correspond the bit rate of the optical signal input to said optical-electrical converter, and
an electrical-optical converter converting an output of said optical-electrical converter; so that the electrical-optical converter of the plurality of optical repeaters constructing common structure.

11. Optical wavelength demultiplexing terminal for providing optical output to a plurality of terminals by demultiplexing the optical wavelength multiplexed signal, characterized in comprising:
a wavelength demultiplexer demultiplexing a plurality of optical wavelength signals; and
a plurality of optical repeaters relaying optical signal from the wavelength demultiplexer to the terminals, wherein said repeaters comprising
an optical-electrical converter converting an output an optical signal from the wavelength demultiplexer and extracting a timing and discriminating a signal; so that said optical-electrical converter performing to correspond the bit rate of the optical signal input to said optical-electrical converter, and
an electrical-optical converter converting an output of said optical-electrical converter, so that the electrical-optical converter of the plurality of optical repeaters constructing common structure.
